# EUROPÄISCHE PATENTSCHRIFT

(11) **EP 1 400 462 B1**
(45) Veröffentlichungstag und Bekanntmachung des Hinweises auf die Patenterteilung: **13.06.2007**
(21) Anmeldenummer: 03020311.1
(22) Anmeldetag: 09.09.2003
(51) Int. Cl.: B65D 77/06, B29C 47/02

(54) **Transport- und Lagerbehälter für Flüssigkeiten**
Transport and storing container for liquids
Récipient de transport et de stockage pour liquides

(30) Priorität: 17.09.2002 DE 10242956
(43) Veröffentlichungstag der Anmeldung: 24.03.2004
(73) Patentinhaber: PROTECHNA S.A., 1701 Fribourg (CH)
(72) Erfinder: Schütz, Udo, 56242 Selters / Westerwald (DE)
(74) Vertreter: Pürckhauer, Rolf

(56) Entgegenhaltungen:
- EP-A- 0 726 132
- DE-A1- 10 042 297
- DE-U1- 20 206 436
- US-A- 6 156 969

## Beschreibung

Die Erfindung betrifft Transport- und Lagerbehälter für Flüssigkeiten, mit einem palettenartigen Untergestell aus Metall oder einem elektrisch leitenden Kunststoff, einem auf dem Untergestell stehenden Innenbehälter aus Kunststoff mit vier Seitenwänden, einem unteren und einem oberen Boden, mindestens einem in den Körper des ein- oder mehrschichtigen Innenbehälters integrierten Abschnitt aus einem elektrisch leitenden Kunststoffmaterial, der eine elektrische Verbindung zwischen der Innenfläche und der Oberfläche des Innenbehälters bildet, einem oberen verschließbaren Einfüllstutzen und einem unteren Auslaufstutzen mit einer Entnahmearmatur oder einem oberen verschließbaren Entleerstutzen, sowie mit einem den Innenbehälter umgebenden Außenmantel, der aus Gitterstäben aus Metall oder Blech besteht.

Der Kunststoff-Innenbehälter von in der DE 100 42 297 A1 beschriebenen Transport- und Lagerbehältern der gattungsgemäßen Art für Flüssigkeiten ist mit einem durch eine Wand des Innenbehälters oder eines Behälterauslaufs hindurchgeführten Kontaktbolzen für die Herstellung einer elektrischen Verbindung zwischen der Flüssigkeit im Innenbehälter bzw. Auslauf und dem als Metallkorb ausgebildeten Außenmantel ausgerüstet. Die mit der Flüssigkeit in Kontakt stehende Oberfläche des Kontaktbolzens ist durch ein elektrisch leitendes, nicht metallisches bzw. überwiegend nicht metallisches Material gebildet. Ein solches Material bewahrt auch gegenüber aggressiven Flüssigkeiten seine Leitfähigkeit und damit die Fähigkeit zur Ableitung vor allem beim Auslaufen der Flüssigkeit aus dem Innenbehälter entstehender Ladungen. Der entscheidende Nachteil dieses bekannten Transport- und Lagerbehälters ist darin zu sehen, dass durch ein einzelnes als Bolzen ausgebildetes Kontaktelement eine umfassende elektrische Erdung des Kunststoff-Innenbehälters und der in diesem befindlichen Flüssigkeit nicht gewährleistet ist.

Der Kunststoff-Innenbehälter von aus der DE 196 05 890 A1 bekannten Transport- und Lagerbehältern für Flüssigkeiten weist eine dauerantistatische Außenschicht auf, die zusammen mit dem metallischen Untergestell als elektrische Erdung dient, um eine elektrostatische Aufladung der Oberfläche des Kunststoff-Innenbehälters durch Reiben des Innenbehälters an dem metallischen Außenmantel beim Transport zu verhindern. Auf diese Weise sollen elektrische Entladungen mit einer Funkenbildung zwischen dem Kunststoff-Innenbehälter und dem Metallgittermantel, die zu einer Entzündung von feuergefährlichen Füllgütern des Transport- und Lagerbehälters sowie von explosionsfähigen Gemischen von Gasen und Dämpfen in geschlossenen Räumen führen können, vermieden werden. Durch diese äußere Erdung mittels einer dauerantistatischen Außenschicht des Kunststoffbehälters können nicht die elektrischen Ladungen abgeleitet werden, die beim Befüllen und Entleeren des Innenbehälters und beim Rühren von Flüssigkeiten in dem Innenbehälter z.B. zu Mischzwecken durch Flüssigkeitsreibung an der Innenfläche des Behälters und in der Flüssigkeit entstehen.

Die DE 197 31 518 A1 beschreibt einen Transport- und Lagerbehälter für Flüssigkeiten, der durch eine auf den Kunststoff-Innenbehälter aufgesetzte Gitterhaube aus dünnem Metalldraht oder ein auf den Innenbehälter aufgebrachtes elektrisch leitfähiges Netz oder Gewebe geerdet ist. Durch diese äußere Erdung werden wie bei dem aus der DE 196 05 890 A1 bekannten Transport- und Lagerbehälter nur die auf der Behälteroberfläche auftretenden elektrischen Ladungen abgeleitet. Ferner ist die elektrische Erdung des Flüssigkeitsbehälter durch eine Gitterhaube, ein Netz oder ein Gewebe technisch aufwendig und führt zu einer entsprechenden Erhöhung der Herstellungskosten.

Bei einem in der DE 198 15 082 A1 beschriebenen Transport-und Lagerbehälter für Flüssigkeiten ist in der am Auslaufstutzen des Innenbehälters angebrachten Entnahmearmatur ein Erdungsteil angeordnet, das als ein gekrümmtes Blech oder Plättchen aus Metall ausgebildet ist, das sich über einen Teilbereich der Innenbohrung der Entnahmearmatur erstreckt und über eine Befestigungsschraube und ein Erdungskabel an das Untergestell des Behälters angeschlossen ist. Durch diese innere Erdung werden nur die in der Flüssigkeit aufgrund von Flüssigkeitsreibung sich bildenden elektrischen Ladungen abgeleitet. Ferner besteht bei diesem Flüssigkeitsbehälter die Gefahr, daß beim Transport und der Lagerung von aggressiven Flüssigkeiten das Erdungsteil von der Flüssigkeit derart beschädigt wird, daß die elektrische Erdung nicht mehr funktionstüchtig ist.

Der Erfindung liegt die Aufgabe zugrunde, den gattungsgemäßen Transport- und Lagerbehälter für Flüssigkeiten im Hinblick auf eine sichere und umfassende Erdung des Kunststoff-Innenbehälters und eine preisgünstige Herstellung weiterzuentwickeln.

Diese Aufgabe wird erfindungsgemäß gelöst durch einen Transport- und Lagerbehälter für Flüssigkeiten mit den Merkmalen des Patentanspruchs 1 sowie die Herstellungsverfahren für den Kunststoff-Innenbehälter des Transport- und Lagerbehälters nach den Patentansprüchen 12 und 13.

Die Unteransprüche beinhalten vorteilhafte und zweckmäßige Weiterbildungen der Erfindung.

Die in das nichtleitende Kunststoffmaterial der Wände sowie des unteren und des oberen Bodens des Innenbehälters des Transport- und Lagerbehälters eingebetteten Streifen aus einem elektrisch leitenden Kunststoffmaterial, deren Stärke der Wandstärke des Innenbehälters entspricht, bilden elektrische Verbindungen zwischen der Innenfläche und der Oberfläche des i mehrschichtigen Innenbehälters, der eine dauerantistatische Außenschicht aufweist, so daß sowohl die im flüssigen Füllgut und an der Innenfläche des Innenbehälters durch Flüssigkeitsreibung auftretenden elektrischen Ladungen als auch die elektrischen Ladungen, die sich durch eine gegenseitige Reibung von Innenbehälter und metallischem Außenmantel auf der Oberfläche des Innenbehälters bilden können, über die elektrisch leitenden Streifen in der Wandung sowie im unteren und oberen Boden des Innenbehälters und die dauerantistatische Außenschicht des Innenbehälters sowie das elektrisch leitende, palettenartige Untergestell in den Boden abgeleitet werden können. Die elektrisch leitenden Streifen aus einem Kunststoffmaterial, dessen Festigkeit geringer ist als diejenige des Basiskunststoffs des Innenbehälters des Transport- und Lagerbehälters, können in geringer beanspruchten Bereichen des durch Extrusionsblasformen hergestellten Innenbehälters, beispielsweise in der Trennebene der Blasform, angeordnet werden, so daß die Festigkeitseigenschaften des Innenbehälters insgesamt nicht beeinträchtigt werden. Die beschränkte Verwendung des teuren antistatischen Kunststoffmaterials, beispielsweise ein Polyethylen hoher Dichte mit einem Leitrußanteil, für die Ausbildung der elektrisch leitenden Streifen und der dauerantistatischen Außenschicht des ansonsten aus einem preisgünstigen Kunststoffmaterial wie ein Polyethylen hoher Dichte gefertigten Kunststoff-Innenbehälters führt lediglich zu einer geringen Verteuerung der Herstellungskosten. Die elektrische Erdung der Behälteroberfläche und des Innenraumes des Kunststoff-Innenbehälters sowie der in diesem zu transportierenden bzw. zu lagernden Flüssigkeiten ermöglicht die Verwendung des Transport- und Lagerbehälters als Gefahrgutbehälter für feuergefährliche Flüssigkeiten und Emulsionen wie Lösungsmittel, Farben und Lacke mit einem Flammpunkt < 35°C sowie den Einsatz des Behälters in Betriebsräumen, in denen sich eine explosive Atmosphäre durch Gase, Dämpfe oder Nebel bilden kann.

Der erfindungsgemäße Transport- und Lagerbehälter für Flüssigkeiten ist nachstehend anhand von Zeichnungsfiguren erläutert, die folgendes darstellen:
- Fig. 1: eine perspektivische Darstellung eines Transport-und Lagerbehälters,
- Fig. 2: einen Wandausschnitt des Kunststoff-Innenbehälters des Transport- und Lagerbehälters mit einem Dreischichtenaufbau in einer vergrößerten perspektivischer Darstellung und
- Fig. 3: einen Teilquerschnitt eines Innenbehälters mit einem Sechsschichtenaufbau in vergrößerter Darstellung.

Der als Ein- und Mehrwegbehälter einsetzbare Transport- und Lagerbehälter 1 für Flüssigkeiten weist als Hauptbauteile einen austauschbaren, quaderförmigen Innenbehälter 2 aus Polyethylen mit einer Stirnwand 3, einer Rückwand 4 und zwei Seitenwänden 5, 6, einem unteren als Ablaufboden ausgebildeten Boden 7, einem oberen Boden 8 mit einem durch einen Schraubdeckel 10 verschließbaren Einfüllstutzen 9 sowie einem Auslaufstutzen 11 im unteren Abschnitt der Stirnwand 3 mit einer Entnahmearmatur 12, einen Außenmantel 13 aus sich kreuzenden senkrechten und waagrechten Gitterstäben 14, 15 aus Metall, ein palettenartiges Untergestell 16 mit einer Bodenwanne 17 aus Blech zur Aufnahme des Kunststoff-Innenbehälters 2 sowie zwei Deckelstäbe 18 aus Metall zum Schutz des Innenbehälters 2 auf.

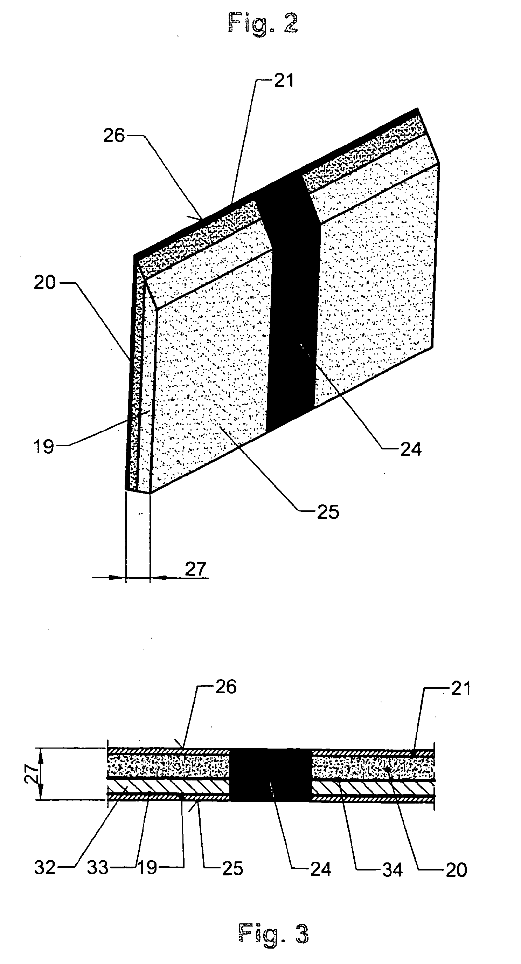

Fig. 2 verdeutlicht, dass Stirnwand 3, Rückwand 4, Seitenwände 5, 6 sowie unterer und oberer Boden 7, 8 des aus einem Polyethylen hoher Dichte durch Extrusionsblasformen hergestellten Kunststoff-Innenbehälters 2 aus einer Innenschicht 19, einer Mittelschicht 20 sowie einer dauerantistatischen Außenschicht 21 mit einem Leitrußanteil bestehen, der einen spezifischen Oberflächenwiderstand ≦ 10⁵ Ohm und einen spezifischen Durchgangswiderstand ≦ 10³ Ohm gewährleistet. Die Dicke der Mittelschicht 20 beträgt 1 bis 2 vorzugsweise 1,5 Millimeter und die Stärke der Innen- und Außenschicht 19, 21 0,1 - 0,5 Millimeter, vorzugsweise 0,2 Millimeter.

Für die Herstellung der Mittelschicht 20 wird ein recyceltes Granulat oder Mahlgut aus reinem Polyethylen und/oder Polyethylen mit einem Leitrußanteil verwendet, und als Ausgangsmaterial für die Innen- und die Außenschicht 19, 21 dient ein neuwertiges Polyethylen-Granulat.

Figur 3 zeigt einen Sechsschichtenaufbau des Kunststoff-Innenbehälters 2 mit einer Innenschicht 19 aus reinem Polyethylen hoher dichte (HDPE), einer Sperrschicht 32 aus Polyamid (PA) oder einem Ethylen-Vinylacetat-Copolymer (EVA) gegen die Permeation von Sauerstoff und Kohlenwasserstoffen, die in zwei Haftvermittlerschichten 33, 34 aus einem Polyethylen niedriger Dichte (LLDPE) eingebettet ist, einer Mittelschicht 20 aus recyceltem Granulat oder Mahlgut aus reinem Polyethylen hoher Dichte und/oder Polyethylen hoher Dichte mit einem Leitrußanteil sowie einer dauerantistatischen Außenschicht 21 aus Polyethylen hoher Dichte mit einem Leitrußanteil.

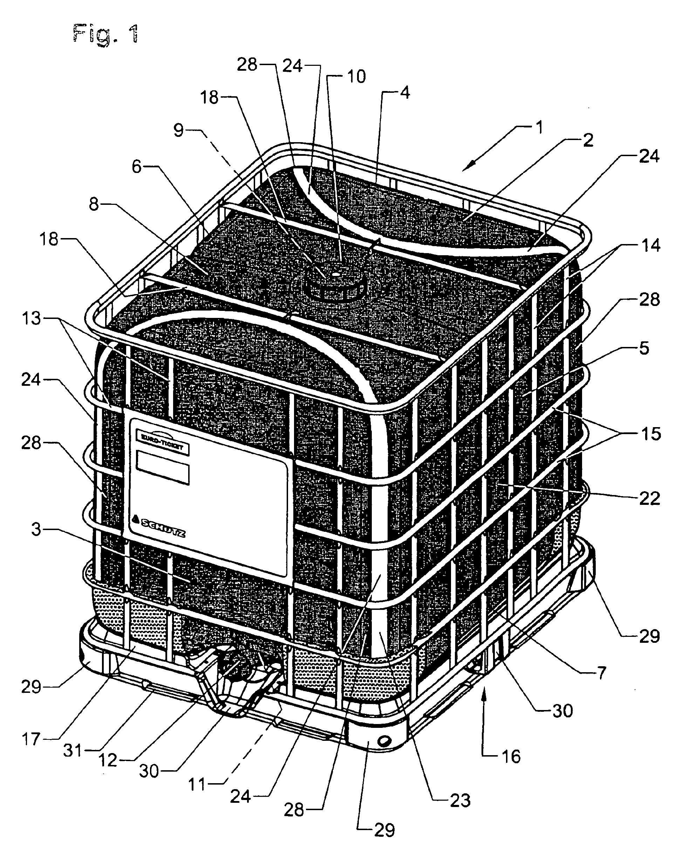

In den Körper 22 des Innenbehälters 2 sind als Streifen 24 ausgebildete, elektrisch leitende Abschnitte 23 aus einem Polethylen hoher Dichte mit einem Leitrußanteil integriert, die elektrische Verbindungen zwischen der Innenfläche 25 und der Oberfläche 26 des Innenbehälters 2 bilden und deren Stärke der Wandstärke 27 des Innenbehälters 2 entspricht. Die elektrisch leitenden Streifen 24, die in Fig. 1 zur Verdeutlichung hell erscheinen, verlaufen senkrecht über die Eckbereiche 28 zwischen den seitlichen Wänden 3 - 6 und/oder die Wände und schräg über den unteren und den oberen Boden 7, 8 des Innenbehälters 2.

Der Schraubdeckel 10 zum Verschließen des Einfüllstutzens 9 und die Entnahmearmatur 12 des Innenbehälters 2 können aus einem elektrisch leitfähigen Kunststoff, vorzugsweise Polyethylen hoher Dichte mit einem Leitrußanteil hergestellt werden.

Die Bodenwanne 17 des Untergestells 16 steht mit einer bestimmten Bodenfreiheit auf Eck- und Mittelfüßen 29, 30 und einem Fußrahmen 31 oder Kufen, so daß die Bodenwanne 17 zum Transport des Behälters 1 von vier Seiten von den Greifarmen eines Transportgerätes, z.B. eines Gabelstaplers, unterfahren werden kann. Die Füße 29, 30 und der Fußrahmen 31 bzw. die Kufen sind aus Metall oder einem elektrisch leitenden Kunststoff, z. B. Polyethylen mit einem Leitrußanteil, hergestellt, so daß der Transport- und Lagerbehälter 1 über die elektrisch leitenden Streifen 24 und die dauerantistatische Außenschicht 21 des Kunststoff-Innenbehälters 2, den Außenmantel 13 und das Untergestell 16 elektrisch geerdet ist und dadurch elektrische Ladungen, die an der Innenfläche des Innenbehälters und im flüssigen Füllgut sowie an der Behälteroberfläche auftreten, abgeleitet werden.

Bei der Herstellung des Kunststoff-Innenbehälters 2 für den Transport- und Lagerbehälter 1 wird zunächst ein mehrschichtiger schlauchförmiger Vorformling aus einem nichtleitenden Grundwerkstoff, insbesondere Polyethylen hoher Dichte, mit über den Umfang verteilten Streifen aus einem elektrisch leitenden Werkstoff, insbesondere Polyethylen hoher Dichte mit einem Leitrußanteil, koextrudiert und anschließend wird der Vorformling in einer Blasform zu einem Innenbehälter geblasen.

Ein weiteres Verfahren zur Herstellung des Kunststoff-Innenbehälters für den vorbeschriebenen Transport- und Lagerbehälter für Flüssigkeiten ist gekennzeichnet durch das Koextrudieren eines mehrschichtigen schlauchförmigen Vorformlings, wobei der aus einem Extruderkopf kontinuierlich oder diskontinuierlich austretende Materialschlauch über den Umfang verteilt aufgespaltet und in die Spalträume ein elektrisch leitfähiger Kunststoff zur Bildung von Streifen eingespritzt wird, die mit dem schlauchförmigen Vorformling homogen verschweißen, sowie das Blasformen des Vorformlings zu einem Innenbehälter in einer Blasform.

## Patentansprüche

1. Transport- und Lagerbehälter für Flüssigkeiten, mit einem palettenartigen Untergestell (16) aus Metall oder einem elektrisch leitenden Kunststoff, einem auf dem Untergestell (16) stehenden Innenbehälter (2) aus Kunststoff mit vier Seitenwänden (3-6), einem unteren und einem oberen Boden (7, 8), mindestens einem in den Körper (22) des ein- oder mehrschichtigen Innenbehälters (2) integrierten Abschnitt aus einem elektrisch leitenden Kunststoffmaterial, der eine elektrische Verbindung zwischen der Innenfläche (25) und der Oberfläche (26) des Innenbehälters (2) bildet, einem oberen verschließbaren Einfüllstutzen (9) und einem unteren Auslaufstutzen (11) mit einer Entnahmearmatur (12) oder einem oberen verschließbaren Entleerstutzen, sowie mit einem den Innenbehälter (2) umgebenden Außenmantel (13), der aus Gitterstäben (14, 15) aus Metall oder Blech besteht, **dadurch gekennzeichnet, dass** der elektrisch leitende Abschnitt oder die elektrisch leitenden Abschnitte (23) des Innenbehälters (2) als Streifen (24) ausgebildet ist beziehungsweise sind, dessen beziehungsweise deren Stärke der Wandstärke (27) des Innenbehälters (2) entspricht.

2. Behälter nach Anspruch 1, **gekennzeichnet durch** einen senkrechten Verlauf der elektrisch leitenden Streifen (24) über die seitlichen Wände (3 - 6) und/oder die Eckbereiche (28) zwischen den Wänden (3 - 6) des Innenbehälters (2).

3. Behälter nach Anspruch 2, **dadurch gekennzeichnet, dass** die elektrisch leitenden Streifen (24) über die seitlichen Wände (3 - 6) und den unteren Boden (7) des Innenbehälters (2) geführt sind.

4. Behälter nach Anspruch 2, **dadurch gekennzeichnet, dass** die elektrisch leitenden Streifen (24) über die seitlichen Wände (3 - 6), den unteren und den oberen Boden (7, 8) des Innenbehälters (2) verlaufen.

5. Behälter nach einem der Ansprüche 1 bis 4, **gekennzeichnet durch** einen einschichtigen Innenbehälter (2) aus einem Polyethylen hoher Dichte.

6. Behälter nach einem der Ansprüche 1 bis 4, **dadurch gekennzeichnet, dass** der Kunststoff-Innenbehälter (2) eine Innenschicht (19) und eine dauerantistatische Außenschicht (21) aufweist.

7. Behälter nach einem der Ansprüche 1 bis 4, **dadurch gekennzeichnet, dass** der Kunststoff-Innenbehälter (2) durch eine Innenschicht (19), eine Mittelschicht (20) und eine dauerantistatische Außenschicht (21) gebildet wird.

8. Behälter nach Anspruch 7, **dadurch gekennzeichnet, dass** zwischen Innenschicht (19) und Mittelschicht (20) des Innenbehälters (2) eine Sperrschicht (32) angeordnet ist, die in zwei Haftvermittlerschichten (33, 34) eingebettet ist.

9. Behälter nach Anspruch 6 bis 8, **dadurch gekennzeichnet, dass** die Innenschicht (19) und die Außenschicht (21) des Innenbehälters (2) aus einem Polyethylen hoher Dichte bestehen, wobei als Ausgangsmaterial neuwertiges Granulat verwendet wird, und die Außenschicht (21) einen Leitrußanteil enthält.

10. Behälter nach Anspruch 7 bis 9, **dadurch gekennzeichnet, dass** die Mittelschicht (20) des Innenbehälters (2) aus einem Polyethylen hoher Dichte besteht, wobei als Ausgangsmaterial recyceltes Granulat oder Mahlgut aus reinem Polyethylen und/oder Polyethylen mit einem Leitrußanteil verwendet wird.

11. Behälter nach einem der Ansprüche 1 bis 10, **dadurch gekennzeichnet, dass** die elektrisch leitenden Streifen (24) des Innenbehälters (2) aus einem Polyethylen hoher Dichte mit einem Leitrußanteil bestehen.

12. Verfahren zur Herstellung eines Kunststoff-Innenbehälters für Transport- und Lagerbehälter für Flüssigkeiten nach den Ansprüchen 1 bis 11, **gekennzeichnet durch** das Extrudieren eines einschichtigen oder das Koextrudieren eines mehrschichtigen schlauchförmigen Vorformlings aus einem nichtleitenden Grundwerkwerkstoff mit über den Umfang verteilten Streifen aus einem elektrisch leitenden Werkstoff sowie das Blasformen des Vorformlings zu einem Innenbehälter in einer Blasform.

13. Verfahren zur Herstellung eines Kunststoff-Innenbehälters für Transport- und Lagerbehälter für Flüssigkeiten nach den Ansprüchen 1 bis 11, **gekennzeichnet durch** das Extrudieren eines einschichtigen oder das Koextrudieren eines mehrschichtigen schlauchförmigen Vorformlings, wobei der aus einem Extruderkopf kontinuierlich oder diskontinuierlich austretende Materialschlauch über den Umfang verteilt aufgespalten und in die Spalträume ein elektrisch leitfähiger Kunststoff zur Bildung von Streifen eingespritzt wird, die mit dem schlauchförmigen Vorformling homogen verschweißen, sowie das Blasformen des Vorformlings zu einem Innenbehälter in einer Blasform.

## Claims

1. Transport and storage container for liquids, having a pallet-like subframe (16) made of metal or an electrically conductive plastic material, an inner container (2) made of plastic material which stands on the subframe (16) and has four lateral walls (3 - 6), a lower and an upper base (7, 8), at least one portion which is made of an electrically conductive plastic material, is integrated in the body (22) of the mono- or multilayer inner container (2) and forms an electrical connection between the inner face (25) and the surface (26) of the inner container (2), an upper closeable filling pipe connection (9) and a lower discharge pipe connection (11) with an emptying fitting (12) or an upper closeable emptying pipe connection, and also having an outer casing (13) which surrounds the inner container (2) and comprises grating rods (14, 15) made of metal or sheet metal, **characterised in that** the electrically conductive portion or the electrically conductive portions (23) of the inner container (2) is or are formed as strips (24), the thickness of which corresponds to the wall thickness (27) of the inner container (2).

2. Container according to claim 1, **characterised by** a vertical course of the electrically conductive strips (24) over the lateral walls (3 - 6) and/or the corner regions (28) between the walls (3 - 6) of the inner container (2).

3. Container according to claim 2, **characterised in that** the electrically conductive strips (24) are guided over the lateral walls (3 - 6) and the lower base (7) of the inner container (2).

4. Container according to claim 2, **characterised in that** the electrically conductive strips (24) extend over the lateral walls (3 - 6), the lower and the upper base (7, 8) of the inner container (2).

5. Container according to one of the claims 1 to 4, **characterised by** a monolayer inner container (2) made of a polyethylene material of high density.

6. Container according to one of the claims 1 to 4, **characterised in that** the plastic material inner container (2) has an inner layer (19) and a permanently antistatic outer layer (21).

7. Container according to one of the claims 1 to 4, **characterised in that** the plastic material inner container (2) is formed by an inner layer (19), a central layer (20) and a permanently antistatic outer layer (21).

8. Container according to claim 7, **characterised in that**, between inner layer (19) and central layer (20) of the inner container (2), a barrier layer (32) is disposed which is embedded in two bonding agent layers (33, 34).

9. Container according to claim 6 to 8, **characterised in that** the inner layer (19) and the outer layer (21) of the inner container (2) comprise a polyethylene of high density, as-new granulate being used as starting material and the outer layer (21) containing a proportion of conductive carbon black.

10. Container according to claim 7 to 9, **characterised in that** the central layer (20) of the inner container (2) comprises a polyethylene of high density, recycled granulate or ground material made of pure polyethylene and/or polyethylene with a proportion of conductive carbon black being used as starting material.

11. Container according to one of the claims 1 to 10, **characterised in that** the electrically conductive strips (24) of the inner container (2) comprise a polyethylene of high density with a proportion of conductive carbon black.

12. Method for producing a plastic material inner container for a transport and storage container for liquids according to the claims 1 to 11, **characterised by** the extrusion of a monolayer or the coextrusion of a multilayer hose-shaped preform made of a non-conductive basic material with strips distributed over the circumference which are made of an electrically conductive material, and also by the blow moulding of the preform to form an inner container in a blow mould.

13. Method for producing a plastic material inner container for a transport and storage container for liquids according to the claims 1 to 11, **characterised by** the extrusion of a monolayer or the coextrusion of a multilayer hose-shaped preform, the material hose which discharges from an extruder head continuously or discontinuously being split up distributed over the circumference and an electrically conductive plastic material being injected into the spaces in the gaps, in order to form strips which weld homogeneously with the hose-shaped preform, and also by the blow moulding of the preform to form an inner container in a blow mould.

## Revendications

1. Cuve de transport et de stockage de liquides, comprenant un sous-bâti (16) de type palette en métal ou en une matière plastique conductrice de l'électricité, une cuve (2) intérieure en matière plastique mise sur le sous-bâti (16) et ayant quatre parois (3 à 6) latérales, un plateau (7) inférieur et un plateau (8) supérieur, au moins une partie en une matière plastique conductrice de l'électricité, intégrée dans le corps (22) de la cuve (2) intérieure ayant une couche ou plusieurs couches, et formant une liaison électrique entre la face (25) inférieure et la surface (26) de la cuve (2) intérieure, une tubulure (9) supérieure de remplissage pouvant être fermée et une tubulure (11) de sortie ayant un robinet (12) de prélèvement ou une tubulure supérieure de vidange pouvant être fermée, ainsi qu'une enveloppe (13) extérieure qui entoure la cuve (2) intérieure et qui est constituée de barreaux (14, 15) de treillis en métal ou en tôle, **caractérisée en ce que** la partie conductrice de l'électricité ou les parties (23) conductrices de l'électricité de la cuve (2) intérieure est ou sont constituées sous la forme de bandes (24) dont l'épaisseur correspond à l'épaisseur (27) de paroi de la cuve (2) intérieure.

2. Cuve suivant la revendication 1, **caractérisée par** une étendue verticale des bandes (24) conductrices d'électricité sur les parois (3 à 6) latérales et/ou les régions (28) de coin entre les parois (3 à 6) de la cuve (2) intérieure.

3. Cuve suivant la revendication 2, **caractérisée en ce que** les bandes (24) conductrices de l'électricité passent sur les parois (3 à 6) latérales et sur le plateau (7) inférieur de la cuve (2) intérieure.

4. Cuve suivant la revendication 2, **caractérisée en ce que** les bandes (24) conductrices de l'électricité s'étendent sur les parois (3 à 6) latérales, sur le plateau (7) inférieur et le plateau (8) supérieur de la cuve (2) intérieure.

5. Cuve suivant l'une des revendications 1 à 4, **caractérisée par** une cuve (2) intérieure en une seule couche en polyéthylène de grande densité.

6. Cuve suivant l'une des revendications 1 à 4, **caractérisée en ce que** la cuve (2) intérieure en matière plastique a une couche (19) intérieure et une couche (21) extérieure antistatique en longue durée.

7. Cuve suivant l'une des revendications 1 à 4, **caractérisée en ce que** la cuve (2) intérieure en matière plastique est formée d'une couche (19) intérieure, d'une couche (20) médiane et d'une couche (21) extérieure antistatique en longue durée.

8. Cuve suivant la revendication 7, **caractérisée en ce qu'**il est interposé entre la couche (19) intérieure et la couche (20) médiane de la cuve (2) intérieure, une couche (32) d'arrêt, qui est incorporée dans deux couches (33, 34) d'agent adhésif.

9. Cuve suivant la revendication 6 à 8, **caractérisée en ce que** la couche (19) intérieure et la couche (21) extérieure de la cuve (2) intérieure sont en polyéthylène de grande densité, du granulé neuf étant utilisé comme matière de départ et la couche (21) extérieure contenant une proportion de suie conductrice.

10. Cuve suivant la revendication 7 à 9, **caractérisée en ce que** la couche (20) médiane de la cuve (2) intérieure est en polyéthylène de grande densité, du granulé ou du produit broyé recyclé en polyéthylène pur et/ou en polyéthylène ayant une proportion de suie conductrice étant utilisée comme matière de départ.

11. Cuve suivant l'une des revendications 1 à 10, **caractérisée en ce que** les bandes (24) conductrices de l'électricité de la cuve (2) intérieure sont en polyéthylène de grande densité ayant une proportion de suie conductrice.

12. Procédé de fabrication d'une cuve intérieure en matière plastique pour des cuves de transport et de stockage de liquides suivant les revendications 1 à 11, **caractérisé par** l'extrusion d'une ébauche en forme de gaine en une seule couche ou par la co-extrusion d'une ébauche tubulaire en plusieurs couches en un matériau de base non conducteur ayant réparties sur le pourtour des bandes en un matériau conducteur de l'électricité, ainsi que la transformation, par moulage par soufflage, de l'ébauche en une cuve intérieure dans un moule de soufflage.

13. Procédé de fabrication d'une cuve intérieure en matière plastique pour des cuves de transport et de stockage de liquides suivant les revendications 1 à 11, **caractérisé par** l'extrusion d'une ébauche en forme de gaine en une seule couche ou la co-extrusion d'une ébauche tubulaires en plusieurs couches, la gaine de matière sortant en continu ou en discontinu de la tête extrudeuse étant fendue d'une manière répartie sur le pourtour et une matière plastique conductrice de l'électricité étant injectée dans les espaces fendus pour former des bandes qui sont soudées de manière homogène à l'ébauche sous forme de gaine ainsi que la transformation, par moulage par soufflage, de l'ébauche en une cuve intérieure dans un moule de soufflage.
